# EUROPÄISCHE PATENTSCHRIFT

(11) **EP 2 862 488 B1**
(45) Veröffentlichungstag und Bekanntmachung des Hinweises auf die Patenterteilung: **24.08.2016**
(21) Anmeldenummer: 14188614.3
(22) Anmeldetag: 13.10.2014
(51) Int. Cl.: A47J 43/046

(54) **Elektromotorisch betriebene Küchenmaschine**
Kitchen appliance operated by electric motor
Robot ménager fonctionnant avec un moteur électrique

(30) Priorität: 18.10.2013 DE 102013111505; 25.09.2014 DE 102014113891
(43) Veröffentlichungstag der Anmeldung: 22.04.2015
(73) Patentinhaber: Vorwerk & Co. Interholding GmbH, 42275 Wuppertal (DE)
(72) Erfinder: Meggle, Martin, 33442 Herzebrock (DE); Koetz, Hendrik, 45138 Essen (DE); Friedrich, Helge, 42275 Wuppertal (DE)
(74) Vertreter: Müller, Enno

(56) Entgegenhaltungen:
- CH-A- 554 139
- DE-A1- 3 122 813
- DE-A1- 3 921 115
- US-A- 2 785 547

## Beschreibung

Die Erfindung betrifft zunächst eine elektromotorisch betriebene Küchenmaschine Nach den Merkmalen des Oberbegriffes des Anspruches 1.

Küchenmaschinen der in Rede stehenden Art sind bekannt. Diese dienen insbesondere im Haushaltsbereich zur Bearbeitung und/oder Verarbeitung von Lebensmitteln, weiter insbesondere zur Zubereitung von Speisen. Derartige Küchenmaschinen weisen bevorzugt ein Rührgefäß auf, in welchem ein bevorzugt elektromotorisch antreibbares Rührwerk, insbesondere bodenseitig angeordnet ist. Über dieses Rührwerk sind Zutaten in dem Rührgefäß miteinander vermengbar oder auch zerkleinerbar.

Darüber hinaus sind Küchenmaschinen bekannt welche zudem ein elektrisch betriebenes Kälteaggregat aufweisen, so insbesondere zur Nutzung der Küchenmaschine für die Erstellung von Speiseeis.

Bei einer aus der DE 3122813 A1 bekannten Küchenmaschine ist ein Behälter mit Kühlsystem vorgesehen, welches sich zwischen einem Innenbehälter und einem Schutzmantel um den Innenbehälter befindet. Die Kühlanlage befindet sich im Unterteil der Küchenmaschine.

Weiter ist zum Stand der Technik auch auf die US 2,785,547 A, die DE 3921115 A1 und die CH 554139 A zu verweisen.

Ausgehend von dem zunächst genannten Stand der Technik beschäftigt sich die Erfindung mit der Aufgabe, eine Küchenmaschine mit einer vorteilhaften Ausbildung und Anordnung eines Kälteaggregats anzugeben.

Diese Aufgabe ist beim Gegenstand des Anspruches 1 gelöst, wobei darauf abgestellt ist, dass das Kälteaggregat ein nach Art eines Deckels auf das Rührgefäß aufsetzbares Halterungsteil aufweist und dass ein Kompressor und/ oder der Elektromotor des Kälteaggregats in einem oberseitig des Halterungsteils, gegebenenfalls oberseitig einer als Einfüllfläche dienenden Oberseite des Rührgefäßes, ausgebildeten Gehäuseteil untergebracht ist.

Das Kälteaggregat ist in dem Rührgefäß aufgenommen und gesondert von dem Kälteaggregat ist in dem Rührgefäß ein Zubereitungsbereich ausgebildet, in welchem ein durch das Rührwerk angetriebenes Rührteil angeordnet ist. Entsprechend ist das Kälteaggregat Teil des Rührgefäßes. Das Rührgefäß weist das entsprechende Kälteaggregat auf.

Das Kälteaggregat ist in bevorzugter Ausgestaltung unmittelbar und weiter bevorzugt betrieblich nicht lösbar dem zu kühlenden Aufnahmebehältnis - hier dem Rührgefäß - zugeordnet. Betrieblich nicht lösbar bedeutet hierbei, dass für einen Benutzer keine werkzeuglose Entfernung des Kälteaggregats möglich ist. Wohl aber gegebenenfalls eine Entfernung unter Nutzung eines Werkzeuges, wie etwa eines Schraubendrehers. Darüber hinaus kann auch eine Verbindung vorgesehen sein, die nur durch Zerstörung von Teilen, etwa einem Aufschweißen oder Auflöten oder Durchschneiden von Teilen, lösbar ist. Das so ausgebildete Rührgefäß ist in einer Ausgestaltung ständig für die Zubereitung einer gekühlten Masse, wie beispielsweise Speiseeis ausgelegt. Das so ausgestaltete Rührgefäß kann aber auch weiter zur üblichen Zubereitung oder Bearbeitung von Lebensmitteln genutzt werden.

Das Rührgefäß weist einen Zubereitungsbereich auf, in welchem sich weiter bevorzugt im Betrieb ein Rührteil drehend bewegt. Insbesondere dieser Zubereitungsbereich wird durch das Kälteaggregat auf eine Temperatur heruntergekühlt, die es erlaubt, in dem Zubereitungsbereich beispielsweise Speiseeis herzustellen. Das auf die Zutaten einwirkende Rührteil ist bevorzugt angetrieben durch das Rührwerk des Rührgefäßes beziehungsweise durch einen elektromotorischen Antrieb in der Küchenmaschine, der bei üblicher Anordnung eines Rührgefäßes mit Rührwerk dem Drehantrieb des Rührwerks dient.

Eine alternative Lösung der Aufgabe ist nach einem weiteren Erfindungsgedanken bei einer Küchenmaschine gegeben, bei welcher darauf abgestellt ist, dass das Kälteaggregat in oder auf das Rührgefäß setzbar ist. Das Kälteaggregat ist an das Rührgefäß ankuppelbar. Hierbei wird bevorzugt ein Rührgefäß zur Zubereitung oder Bearbeitung von Lebensmitteln genutzt. Entsprechend ist in bevorzugter Ausgestaltung ein Rührgefäß zur Bearbeitung von Lebensmitteln und/oder zur Zubereitung von Speisen auch nutzbar zur Zubereitung von beispielsweise Speiseeis, dies, indem das Kälteaggregat in das Rührgefäß beziehungsweise in das Rührgefäß eingreifend einsetzbar ist oder auf dieses quasi deckelartig aufsetzbar ist.

In bevorzugter Ausgestaltung ist als Kälteaggregat eine Kompressions-Kältemaschine vorgesehen, mit einem Kältemittel, das bevorzugt in einem geschlossenen Kreislauf bewegt wird. Entsprechend sind wesentliche Bestandteile eines solchen Kälteaggregats ein Kompressor, ein Verflüssiger und ein Verdampfer, weiter bevorzugt auch ein Drosselventil und ein Thermostat. In weiterer alternativer Ausgestaltung weist das Kälteaggregat ein Peltier-Element auf, welches darüber hinaus auch eine aktive Kühlung mittels eines Kühlmittel-Kreislaufes, also gegebenenfalls einem Kälteaggregat mit einer Kompressions-Kältemaschine, erfahren kann.

In dem Rührgefäß, insbesondere bei einer Ausgestaltung mit aufgenommenem Kälteaggregat, ist in bevorzugter Ausgestaltung zwischen dem Kälteaggregat und dem Zubereitungsbereich eine im Wesentlichen horizontale Teilung ausgebildet. Diese Teilung trennt insbesondere den Bereich des Kälteaggregats hermetisch vom Zubereitungsbereich. Die horizontale Teilung ist insbesondere durch einen Boden des Zubereitungsbereiches gegeben.

Auch ist bevorzugt, dass der Bereich des Kälteaggregats, insbesondere bei einer Anordnung des Kälteaggregats in dem Rührgefäß, von einer Antriebswelle für das Rührteil durchsetzt ist. Das Rührteil ist hierbei bevorzugt in dem Zubereitungsbereich angeordnet, weiter insbesondere dem Bodenbereich des Zubereitungsbereiches zugeordnet. Die Antriebswelle zum Antrieb des Rührteiles durchgreift hierbei weiter bevorzugt die horizontale Teilung sowie den Bereich des Kälteaggregats, wobei insbesondere im Bereich der Durchsetzung der horizontalen Teilung eine Abdichtung vorgesehen ist, die den Anforderungen zur Zubereitung von Speisen, insbesondere Speiseeis im Zubereitungsbereich genügt.

Bodenseitig endet die Antriebswelle des Rührgefäßes bevorzugt in einer Kupplung, zur Zusammenwirkung mit einer Antriebswelle des Rührgefäßes im eingesetzten Zustand in der Küchenmaschine. Somit ist in bevorzugter Ausgestaltung insbesondere das Rührteil des das Kälteaggregat aufweisenden Rührgefäßes mit Einsetzen des Rührgefäßes in die Küchenmaschine betriebsbereit. Dies ist durch Herstellung einer drehfesten Kupplung zwischen der Antriebswelle des Drehteils und einer bevorzugt elektromotorisch antreibbaren Welle in der Küchenmaschine erreicht. Durch die Kupplung ist die Entnahme des Rührgefäßes aus der Küchenmaschine bevorzugt werkzeuglos ermöglicht, hierdurch ist weiter auch eine handhabungsgünstige Entleerung des Zubereitungsbereiches ermöglicht.

Ein Boden des Zubereitungsbereiches, welcher Boden in bevorzugter Ausgestaltung zugleich die horizontale Teilung zwischen Zubereitungsbereich und Kälteaggregat bildet, ist in einer möglichen Ausgestaltung mit Kälteschlangen des Kälteaggregats in wärmeleitendem Kontakt oder von diesen durchsetzt. Entsprechend bevorzugt ist eine Kühlung erreicht zufolge eines in Kreislauf versetzbaren Kältemittels, welches insbesondere im Bereich des zu kühlenden Bodens des Zubereitungsbereiches Kälteschlangen durchläuft. Insbesondere das Material des Bodens des Zubereitungsbereiches ist wärmeleitend ausgebildet, so insbesondere aus einem Metallwerkstoff oder einem wärmeleitendem Kunststoff.

Bevorzugt sind bodenseitig insbesondere des das Kälteaggregat aufweisenden Rührgefäßes zur Spannungsversorgung des Elektromotors des Kälteaggregats und/oder weiterer beziehungsweise anderer Elektrokomponenten Elektrokontakte ausgebildet, die bei eingesetztem Zustand des Rührgefäßes in leitender Verbindung zu Kontakten der Küchenmaschine stehen. Bevorzugt weist hierzu die Küchenmaschine eine entsprechende elektrische Schnittstelle auf, über welche die elektrische, gegebenenfalls auch elektronische Steuerung des Kälteaggregats bei entsprechend eingesetztem Rührgefäß erfolgen kann. Bevorzugt werden hierzu die Elektro-Schnittstellen genutzt, die bei Einsatz eines üblichen Rührgefäßes zur Bearbeitung von Lebensmitteln beziehungsweise zur Herstellung von Speisen genutzt werden. Entsprechend ist bevorzugt mit Einsetzen des das Kälteaggregat aufweisenden Rührgefäßes in die Küchenmaschine beziehungsweise in eine entsprechend ausgebildete Gefäßaufnahme der Küchenmaschine sowohl die mechanische Kupplung des Rührteils als auch eine elektrische Kopplung erreicht.

Bevorzugt ist das mit dem Kälteaggregat versehene Rührgefäß in einer Küchenmaschine betreibbar, welche zudem auch geeignet ist, mit einem Rührgefäß ohne Kälteaggregat insbesondere zur Bearbeitung von Lebensmitteln und zur Herstellung von Speisen zu arbeiten. Falls hierfür zwei unterschiedliche Rührgefäße vorgesehen sind, einmal mit verbundenem Kälteaggregat und einmal ohne Kälteaggregat, ist für beide Rührgefäße bevorzugt dieselbe Rührgefäß-Aufnahme in der Küchenmaschine vorgesehen. Dann kann wahlweise das eine oder andere Rührgefäß eingesetzt werden. Weiter insbesondere im Zusammenhang mit der vorbeschriebenen elektrischen Schnittstelle und weiter bevorzugt im Zusammenhang mit der in der Küchenmaschine vorgesehenen Steuerung bietet es sich an, dass insbesondere das mit dem Kälteaggregat versehene Rührgefäß von der Küchenmaschine erkennbar ist. Bei entsprechender Erkennung werden beispielsweise in der Küchenmaschine vorgegebene Steuerroutinen freigeschaltet, um insbesondere das Kälteaggregat zu betreiben. Gegebenenfalls werden weiter bei entsprechendem Vorhandensein in einem Display Rezeptvorschläge angeboten, so insbesondere zur Speiseeisbereitung. In bevorzugter Ausgestaltung erfolgt die Erkennung zufolge einer elektrischen oder elektronischen Abfrage oder einer mechanischen Schaltung. Eine elektrische oder elektronische Abfrage kann beispielsweise über eine elektrische Schnittstelle zwischen der Küchenmaschine als solcher und dem Rührgefäß erfolgen, gegebenenfalls auch einer elektrischen Schnittstelle zwischen der Küchenmaschine als solcher und unmittelbar dem Kälteaggregat. Beispielsweise durch Ermittlung eines elektrischen Widerstandes bei einem sich zufolge dieser Schnittstelle ergebenden Leitungsweg. Der elektrische Widerstand ist spezifisch für das Rührgefäß mit dem Kälteaggregat bzw. das Kälteaggregat alleine vorgesehen, so dass (jedenfalls) das diesbezügliche Rührgefäß bzw. das Kälteaggregat hierdurch schaltungstechnisch erkennbar ist. Eine mechanische Schaltung ist beispielsweise dadurch erreicht, dass das mit dem Kälteaggregat versehene Rührgefäß einen entsprechend positionierten Vorsprung, beispielsweise im Bodenbereich, aufweist, der auf einen Schalter oder dergleichen wirkt.

Auch kann insbesondere ein ein- oder aufsetzbares Kälteaggregat auf das Kälteaggregat ein nach Art eines Deckels auf das Rührgefäß aufsetzbares Halterungsteil aufweisen. In üblicher Weise weist ein Rührgefäß mit Rührwerk einen Deckel auf. Dieser ist weiter bevorzugt im Betrieb der Küchenmaschine, weiter insbesondere im Betrieb des Rührwerks mit dem oder relativ zu dem Rührgefäß verriegelt. Zur Nutzung der Küchenmaschine zur Zubereitung gekühlter Massen, insbesondere zur Zubereitung von Speiseeis, wird in bevorzugter Ausgestaltung der Deckel des Rührgefäßes ausgetauscht gegen das mit dem Kälteaggregat versehene Halterungsteil. Letzteres überdeckt hierbei in bevorzugter Ausgestaltung den Innenraum des Rührgefäßes, hierbei gegebenenfalls eine bevorzugt verschließbare Öffnung zur Zugabe von Zutaten während des Herstellungsprozesses aufweisend.

Das Kälteaggregat ist hierbei bevorzugt außerhalb des Rührgefäßes angeordnet, dies insbesondere bezogen auf einen unterhalb des Halterungsteils gegebenen Innenraum des Rührgefäßes. So ist in weiter bevorzugter Ausgestaltung der sich unterhalb des auf das Rührgefäß aufgesetzten Halterungsteiles der Rührgefäß-Innenraum frei nutzbar zur Herstellung von beispielsweise Speiseeis, dies weiter bevorzugt unter Nutzung des in dem Rührgefäß vorgesehenen Rührwerks, gegebenenfalls unter Nutzung eines das Rührwerk ergänzenden, mitdrehenden Aufsatzes.

Während in vorbeschriebener Ausgestaltung bevorzugt der Kompressor, der Verflüssiger, das Drosselventil und das Thermostat, gegebenenfalls auch weitere elektronische oder elektrische Komponenten des Kälteaggregats außerhalb des Rührgefäßes angeordnet sind, ist in weiter bevorzugter Ausgestaltung vorgesehen, dass die Kälteschlangen und somit der Verdampfer sich innerhalb des Innenraumes des Rührgefäßes erstrecken. So sind diese Kälteschlangen bevorzugt unterseitig des Halterungsteiles, dem Innenraum des Rührgefäßes zuordbar, angeordnet.

Insbesondere bei einer Ausgestaltung mit einem mit Bezug auf den Innenraum des Rührgefäßes außerhalb des Rührgefäßes angeordneten Kälteaggregats ist in bevorzugter Ausgestaltung vorgesehen, dass ein Elektromotor des Kälteaggregats und/oder weitere Komponenten des das Kälteaggregat aufnehmenden Bereichs über ein gesondertes Stromkabel elektrisch versorgbar ist. Entsprechend ist das Kälteaggregat beziehungsweise der Elektromotor desselben gegenüber der Küchenmaschine gesondert an die Stromversorgung anzuschließen, dies weiter bevorzugt zufolge manuellen Eingriffs durch den Benutzer.

Hierbei kann es sich um ein gesondertes Netzkabel handeln, welches entsprechend dem Netzkabel für die Küchenmaschine in eine Steckdose des Haushaltsnetzes eingesteckt wird. Alternativ ist das gesonderte Stromkabel mit einem Stecker zum Einstecken in eine in der Küchenmaschine ausgebildete und gesonderte elektrische Steckaufnahme versehen. Entsprechend weist die Küchenmaschine eine entsprechende Steckkupplung auf die gegebenenfalls allein zur Aufnahme eines entsprechend konfigurierten Elektrosteckers des gesonderten Stromkabels ausgelegt ist. Mit Einstecken des Steckers des gesonderten Stromkabels in die gesonderte elektrische Steckaufnahme der Küchenmaschine können auch weitere Funktionen der Küchenmaschine freigeschaltet oder auch gesperrt werden, so beispielsweise die Sperrung einer gegebenenfalls vorgesehenen elektrischen Widerstandsheizung im Rührgefäß.

Bevorzugt ist weiter, dass ein Kompressor und/oder der Elektromotor des Kälteaggregats, weiter bevorzugt auch weitere Elemente des Kälteaggregats, wie beispielsweise ein Verflüssiger, ein Drosselventil oder ein Thermostat, in einem oberseitig des Halterungsteils (mit Bezug auf die Nutzungsstellung), gegebenenfalls oberseitig einer als Einfüllfläche dienenden Oberseite des Rührgefäßes, ausgebildeten Gehäuseteil untergebracht ist. Dieses gesonderte Gehäuseteil ist bevorzugt mit dem Halterungsteil verbunden, weiter bevorzugt nicht werkzeuglos lösbar verbunden.

Das Gehäuseteil ist in bevorzugter Ausgestaltung über eine oder mehrere starre Verbindungen an dem Halterungsteil befestigt. Hierbei ist weiter bevorzugt, dass die Verbindungen gegebenenfalls auch der Leitung von Kälteflüssigkeit dienen, so weiter beispielsweise durchsetzt sind mit Zu- und Abführleitungen der Kälteschlangen, welche sich bevorzugt auf der dem Gehäuseteil abgewandten Seite des Halterungsteiles erstrecken.

Das Halterungsteil weist in bevorzugter Ausgestaltung unterseitig ein ausgebildetes Ringteil auf, das zum Eingriff in das Rührgefäß ausgebildet ist und von der Kälteflüssigkeit durchströmbar ist. Entsprechend sind die Kälteschlangen bevorzugt in dem Ringteil aufgenommen, wobei weiter das Ringteil bevorzugt aus einem wärmeleitenden Material besteht, beispielsweise aus einem Metallwerkstoff oder einem wärmeleitfähigen Kunststoff.

Weiter bevorzugt ist der so gebildete Verdampferteil so ausgebildet, dass dieser in Einsetzstellung in das Rührgefäß mit radialem Abstand zur Wandungsinnenfläche des Rührgefäßes verläuft, so dass sich entsprechend zwischen der Außenwandung des Ringteiles und der Innenwandung des Rührgefäßes eine Luftschicht ergibt.

In weiterer alternativer Ausgestaltung bildet das Halterungsteil einen Aufsetzrand aus zum Aufsetzen auf einen Stirnrand des Rührgefäßes, wobei in einem unteren Bereich des Halterungsteils das Kälteaggregat und in einem oberen Bereich der Zubereitungsbereich ausgebildet ist. Es ist entsprechend eine vergleichbare Anordnung vorgesehen, wie dies eingangs anhand des Rührgefäßes mit integriertem Kälteaggregat beschrieben ist. Auch hier ist der Zubereitungsbereich oberhalb des Kälteaggregats angeordnet, hier jedoch in Form eines in das Rührgefäß einsetzbaren Teils. Auch ist bevorzugt in dieser Ausführungsform eine gesonderte Stromversorgung des Kälteaggregats vorgesehen. In weiterer Ausgestaltung ist der Bereich des Kälteaggregats durchsetzt von einer mit dem Rührwerk des Rührgefäßes kuppelbaren Antriebswelle, die ein in dem Zubereitungsbereich angeordnetes Rührteil im Betrieb drehantreibt.

Weiter betrifft die Erfindung eine Küchenmaschine nach den Merkmalen des Oberbegriffs des Anspruches 1.

Um eine Küchenmaschine der in Rede stehenden Art in gebrauchsvorteilhafter Weise weiterzubilden, ist vorgesehen, dass zwei austauschbare Rührgefäße vorgesehen sind, wobei eines der Rührgefäße für die übliche Nutzung der Küchenmaschine ausgebildet ist, so beispielsweise zur Bearbeitung von Lebensmitteln und/oder zur Zubereitung von Speisen, und das zweite Rührgefäß das Kälteaggregat aufweist. Zufolge dieser Ausgestaltung ist die Nutzung der Küchenmaschine in vorteilhafter Weise erweitert. Neben der üblichen Zubereitung von Speisen, insbesondere Warmspeisen, oder auch beispielsweise die Herstellung von Teigen oder dergleichen, ist zufolge Austausch des Rührgefäßes auch die Herstellung von beispielsweise Speiseeis ermöglicht. Hierzu verfügen beide Rührgefäße in bevorzugter Ausgestaltung über zumindest formidentische Aufnahmebereiche, die einer Rührgefäß-Aufnahme der Küchenmaschine zuordbar sind. Bevorzugt ist weiter insbesondere das mit dem Kälteaggregat versehene Rührgefäß zufolge einer elektrischen oder elektronischen Abfrage oder einer mechanischen Schaltung von der Küchenmaschine als solches erkennbar.

Hinsichtlich ergänzender oder alternativer Merkmale im Zusammenhang mit der Küchenmaschine mit zwei austauschbaren Rührgefäßen gilt für deren anspruchsmäßige Zuordnung das Gleiche wie oben ausgeführt.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine erste Ausführungsform einer elektromotorisch betriebenen Küchenmaschine in perspektivischer Darstellung;
- Fig. 2: in perspektivischer Explosionsdarstellung das Rührgefäß der Küchenmaschine und ein in das Rührgefäß einsetzbares Kälteaggregat;
- Fig. 3: die Vorderansicht zu Figur 1;
- Fig. 4: die Rückansicht hierzu;
- Fig. 5: eine Seitenansicht bei partiell geschnittenem Rührgefäß und Kälteaggregat;
- Fig. 6: in einer zweiten Ausführungsform das partiell geschnittene Rührgefäß mit einem eingesetzten, alternativen Kälteaggregat;
- Fig. 7: eine partielle Schnittdarstellung gemäß Figur 6 durch ein Rührgefäß in einer weiteren Ausführungsform mit in dem Rührgefäß ausgebildetem Kälteaggregat.

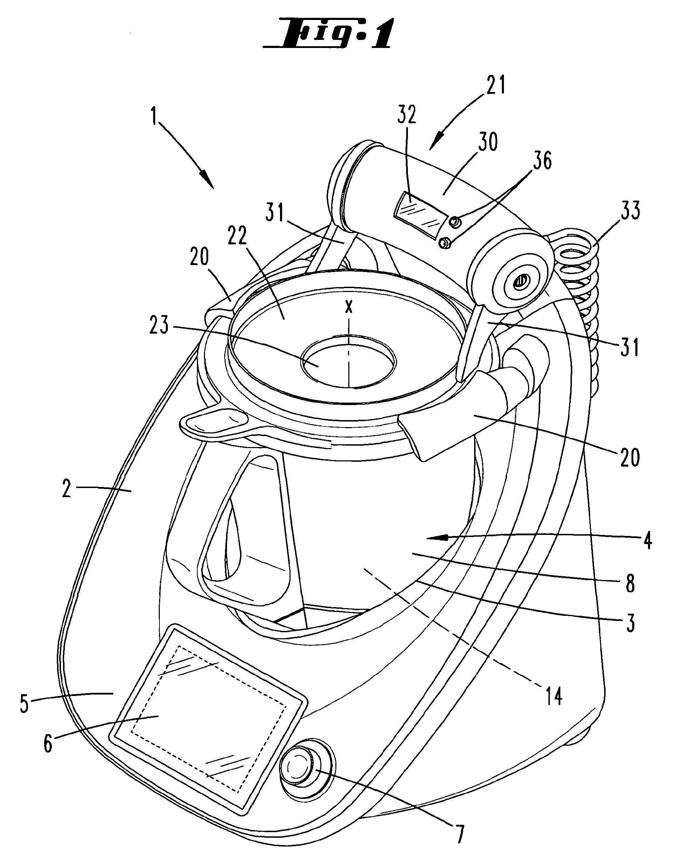

Dargestellt und beschrieben ist zunächst mit Bezug zu Figur 1 eine elektromotorisch betriebene Küchenmaschine 1, insbesondere Haushalts-Küchenmaschine.

Die Küchenmaschine 1 weist zunächst ein Gehäuse 2 auf, in welchem in bevorzugter Ausgestaltung insbesondere die Steuerelektronik der Küchenmaschine 1 aufgenommen ist, darüber hinaus weiter bevorzugt eine nicht dargestellte Waage.

In dem Gehäuse 2 ist eine Rührgefäß-Aufnahme 3 ausgeformt, zur Aufnahme und Halterung eines Rührgefäßes 4.

In Betriebsstellung der Küchenmaschine 1 ist bevorzugt dem Benutzer zugewandt ein Bedienfeld 5 ausgebildet, insbesondere aufweisend ein Display 6 und einen Multifunktions-Steller 7, insbesondere zur Einstellung einer Betriebszeit und/ oder einer Drehzahl und/ oder einer Temperatur.

Das Rührgefäß 4 weist eine Rührgefäß-Wandung 8 auf. Diese ist bevorzugt aus Edelstahl hergestellt. Die Rührgefäß-Wandung 8 erstreckt sich bevorzugt konzentrisch zu einer in Betriebsstellung gemäß Figur 1 senkrecht ausgerichteten Rührgefäß-Achse x.

In Betriebsstellung nach vertikal oben begrenzt die Rührgefäß-Wandung 8 eine Gefäßöffnung 9.

Der Rührgefäß-Boden 10 ist in bevorzugter Ausgestaltung aufheizbar ausgebildet. Hierzu ist bevorzugt in dem Rührgefäß-Boden 10 eine elektrische Widerstandsheizung vorgesehen.

Die Spannungsversorgung und Steuerung der elektrischen Heizung des Rührgefäß-Bodens 10 erfolgt in bevorzugter Ausgestaltung über die Küchenmaschine 1, wozu bevorzugt unterseitig des Gefäßbodens 9 frei nach unten abragende Kontakte 11 des Rührgefäßes 4 mit entsprechenden Gegenkontakten 12 der Küchenmaschine 1 im Bereich der Rührgefäß-Aufnahme 3 in der Betriebsstellung des Rührgefäßes 4 in elektrischer Verbindung stehen.

Die elektrische Versorgung der Küchenmaschine 1, so entsprechend auch der elektrischen Komponenten desselben, ist erreicht über ein Netzkabel 13.

Weiter weist das Rührgefäß 4 insbesondere zugeordnet dem Rührgefäß-Boden 10 im durch die Rührgefäß-Wandung 8 begrenzten Zubereitungsbereich 14 ein Rührwerk 15 auf. Letzteres ist in Betriebsstellung um die Rührgefäß-Achse x drehbar, so beispielsweise zur Zerkleinerung von Lebensmitteln im Zubereitungsbereich 14 und/oder zum Verrühren von Zutaten.

Das Rührwerk 15 durchsetzt mit einer Antriebswelle 16 den Rührgefäßboden 10, welche Antriebswelle 16 unterseitig des Rührgefäß-Bodens 10 einen Kupplungskopf 17 ausformt. Letzterer steht in Einsetzstellung des Rührgefäßes 4 in der Rührgefäß-Aufnahme 3 mit einer geräteseitigen Kupplungsaufnahme 18 in drehfester Verbindung, welche im Betrieb der Küchenmaschine 1 durch einen Elektromotor 19 drehantreibbar ist.

Bei üblicher Nutzung der Küchenmaschine 1 beispielsweise zur Zubereitung von warmen Speisen, ist der Zubereitungsbereich 14 des Rührgefäßes 4 durch einen nicht dargestellten Deckel überdeckt. Dieser liegt bevorzugt auf dem freien Stirnbereich der Rührgefäß-Wandung 8 auf und ist durch küchenmaschinenseitige Festlegungsmittel 20 insbesondere im Betrieb des Rührwerks 15, darüber hinaus im Betrieb der Heizung gegen das Rührgefäß 4 gesichert.

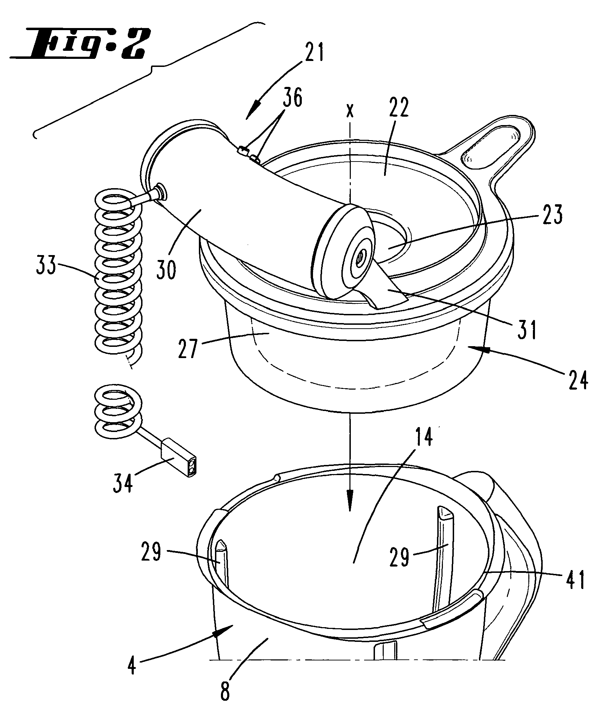

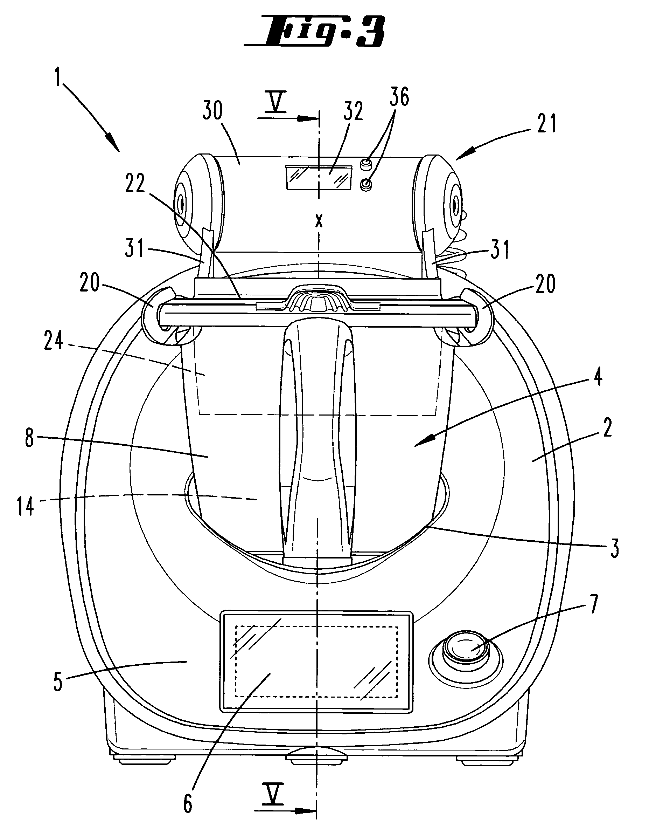

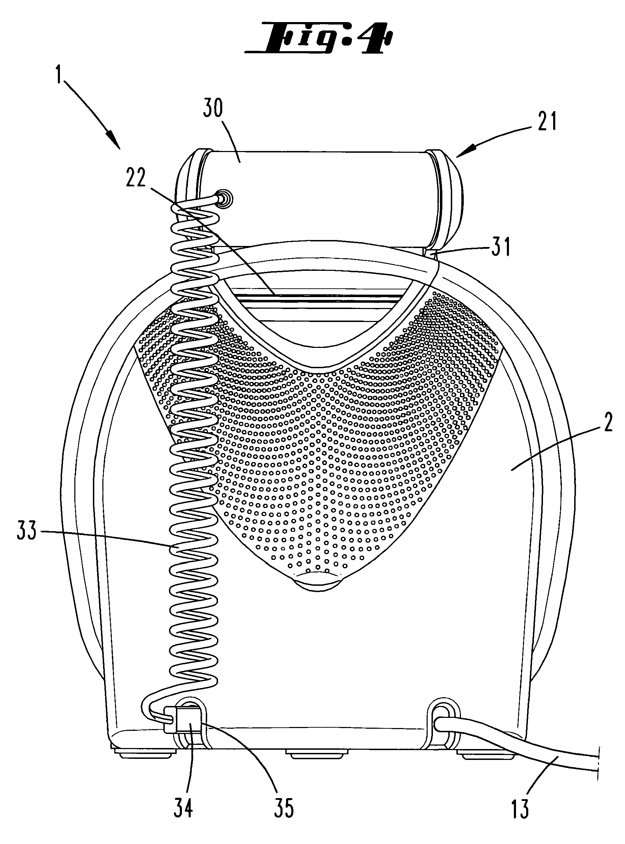

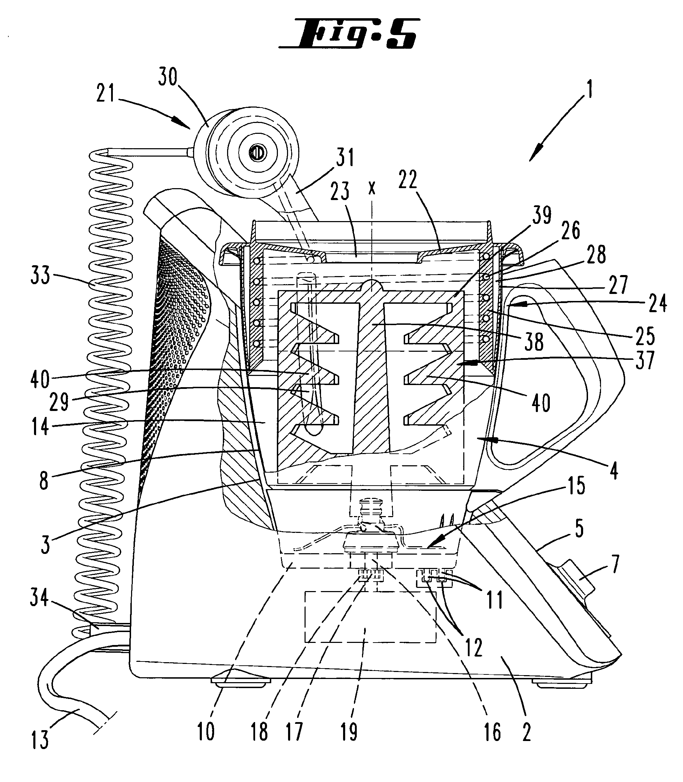

Die Küchenmaschine 1 ist in weiterer Ausgestaltung geeignet zur Herstellung von Speiseeis. Hierzu ist in einer ersten Ausführungsform gemäß den Figuren 1 bis 5 ein gesondertes Kälteaggregat 21 zum Einsatz in das Rührgefäß 4 vorgesehen.

Das Kälteaggregat 21 wird in bevorzugter Ausgestaltung anstelle des Deckels auf das Rührgefäß 4 aufgesetzt, wozu zunächst ein nach Art eines Deckels ausgebildetes Halterungsteil 22 vorgesehen ist. Dieses Halterungsteil 22 überfängt die Gefäßöffnung 9 und stützt sich hierbei bevorzugt auf dem umlaufenden Rand der Rührgefäß-Wandung 8 ab. Weiter bevorzugt ist das Halterungsteil 22 ausgelegt, zur Festlegung desselben an dem Rührgefäß 4 unter Nutzung der geräteseitigen Festlegungsmittels 20. Diese überfangen in der Verriegelungsstellung entsprechende Randbereiche des Halterungsteiles 22.

Bezüglich der Verriegelung wird beispielsweise auf die DE 102010037892 A1 verwiesen. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Das deckelartige Halterungsteil 22 weist weiter bevorzugt zentral eine Öffnung 23 auf. Durch diese kann ein Zubereitungsprozess im Zubereitungsbereich 14 beobachtet werden. Weiter können über die Öffnung 23 während des Zubereitungsprozesses ohne Abnahme des Halterungsteiles 22 Zutaten hinzugefügt werden.

Unterseitig, d.h. in Betriebsstellung in den Zubereitungsbereich 14 des Rührgefäßes 4 einragend, ist an dem Halterungsteil 22 ein in einem Querschnitt quer zur Achse x kreisringförmig gestalteter Verdampfer 24 angeordnet. Dieser besteht zunächst aus einer bevorzugt konzentrisch zur Achse x verlaufenden, zylindrischen Wandung 25, in welcher Kälteschlangen 26 angeordnet sind. Die Kälteschlangen 26 sind ausgebildet zum Durchfluss von Kältemittel.

Die in Axialrichtung betrachtete Länge der Wandung 25 ist bevorzugt so gewählt, dass die nach radial außen weisende Oberfläche der Wandung 25 die Innenwandung der sich nach oben hin konisch erweiternden Rührgefäß-Wandung 8 berührt. Der sich hierbei zwischen der Rührgefäß-Wandung 8 und der Wandung 25 im Vertikalschnitt ergebende Keilbereich ist bevorzugt oberseitig durch das Halterungsteil 22 und radial außen umlaufend durch eine sich an der Innenseite der Rührgefäß-Wandung 8 bevorzugt anlegende Keilwand 27 geschlossen. Es ergibt sich so in bevorzugter Ausgestaltung ein luftgefüllter Isolationsraum 28, der, gegebenenfalls mit Ausnahme der Bereiche der Strömungsbrecher 29 der Rührgefäß-Wandung 8, insgesamt ringförmig den Verdampfer 24 umgibt.

Oberseitig des Halterungsteils 22, d.h. dem Verdampfer 24 abgewandt, ist ein Gehäuseteil 30 ausgebildet. Dieses ist im Betrieb der Küchenmaschine 1 als insbesondere Speiseeisbereiter für den Benutzer im Sichtbereich.

Das Gehäuseteil 30 stützt sich in bevorzugter Ausgestaltung über zwei starre Verbindungen 31 auf dem Halterungsteil 22 ab. Durch diese Verbindungen 31 sind Zu- und Abführleitungen der Kälteschlangen 26 geführt.

In dem Gehäuseteil 30 sind in bevorzugter Ausgestaltung weitere Komponenten des Kälteaggregats 21 aufgenommen, so insbesondere ein Kompressor und ein Verflüssiger, darüber hinaus gegebenenfalls ein Drosselventil und ein Thermostat. Auch ist bevorzugt eine Steuerelektronik in dem Gehäuseteil 30 vorgesehen, weiter bevorzugt auch ein Ventilator. Über nicht näher dargestellte Gehäuseöffnungen ist eine Wärmeabfuhr ermöglicht.

Weiter ist bevorzugt in der im Wesentlichen in Richtung auf das Bedienfeld 5 weisenden Oberfläche des Gehäuseteils 30 ein Display 32 vorgesehen, so insbesondere zur Anzeige des Temperatur-Ist-Wertes im Bereich des Verdampfers 24.

Das Kälteaggregat 21, so insbesondere das Gehäuseteil 30 ist über ein gesondertes Stromkabel 33 elektrisch versorgbar. Dieses Stromkabel 33 verfügt über einen Stecker 34 zum Einstecken in eine, in der Küchenmaschine 1 ausgebildete, gesonderte elektrische Steckaufnahme 35. Entsprechend erfolgt eine Stromversorgung des Kälteaggregats 21 über die Küchenmaschine 1. Alternativ ist das Stromkabel 33 auch mit einem Netzstecker versehen.

Bei der beschriebenen Ausgestaltung mit einem elektrischen Anschluss des Kälteaggregats 21 an der Küchenmaschine 1 ist neben der Stromversorgung auch eine Informations-Schnittstelle in bevorzugter Ausgestaltung gegeben. So ist weiter bevorzugt vorgesehen, dass in dem Gehäuseteil 30, bevorzugt benachbart zu dem Display 32, Bedientasten 36 vorgesehen sind, so zum einen bevorzugt zum Ein- und Ausschalten des Kälteaggregats 21 und zum Weiteren zur Steuerung der Drehzahl des in dem Rührgefäß 4 befindlichen Rührwerks 15.

Alternativ zur Steuerung der Drehzahl des Rührwerks 15 über eine der Bedientasten 36 ist auch eine übliche Bedienung des Rührwerks 15 über den Multifunktions-Steller 7 möglich, wobei in bevorzugter Ausgestaltung die Drehzahl und/ oder die Drehrichtung des Rührwerks 15 bei aktivem Kälteaggregat 21 beschränkt ist. Bevorzugt wird hierbei über das gesonderte Stromkabel 33 eine diesbezügliche Information an die Steuerelektronik der Küchenmaschine 1 übermittelt.

In dem Zubereitungsbereich 14 ist bevorzugt ein insbesondere für die Speiseeisbereitung geeignetes Rührteil 37 vorgesehen. Dieses ist bevorzugt drehfest gekuppelt mit dem rührgefäßseitigen Rührwerk 15. Hierzu weist das Rührteil 37 zunächst einen zentralen, bevorzugt mittig die Rührgefäß-Achse x aufnehmenden Dorn 38 auf, von welchem sich nach radial außen flügelartige Rührteil-Abschnitte 39 erstrecken.

Jeder Rührteil-Abschnitt 39 ist im Wesentlichen rahmenartig aufgezogen, weist entsprechend einen axial unteren und einen axial oberen Radialausleger auf, welche Ausleger radial außen über einen im Wesentlichen parallel zur Achse x verlaufenden Schenkel verbunden sind. Von diesem Rahmenschenkel nach radial innen weisend gehen im Vertikalschnitt etwa keilförmige Einwirkungsabschnitte 40 aus.

Das gesonderte Stromkabel 33 ist in weiter bevorzugter Ausgestaltung sowohl von der Küchenmaschine 1 als auch von dem Kälteaggregat 21 entfernbar. Insbesondere das gesondert auf das Rührgefäß 4 aufzusetzende beziehungsweise in dieses einzusetzende Kälteaggregat 21 ist zusammen mit dem Zubereitungsbereich 14 bevorzugt wasserresistent, weiter bevorzugt spülmaschinenfest ausgebildet. Weiter bevorzugt erfolgt über das angeschlossene Stromkabel 33 eine elektronische Erkennung des Kälteaggregats 21, zur Freigabe und/oder Sperrung von Stellparametern, wie beispielsweise eine Drehzahl.

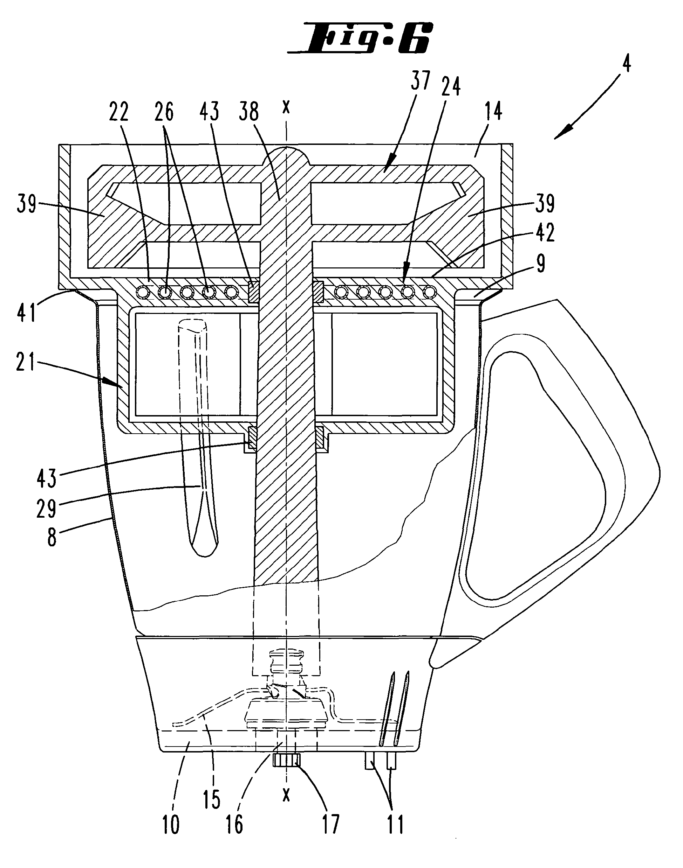

Zur Speiseeisbereitung gemäß dem ersten Ausführungsbeispiel wird das übliche Rührgefäß 4 verwendet. Dies gilt im Übrigen auch für die zweite Ausführungsform gemäß der Darstellung in Figur 6.

In dieser Ausführungsform wird ebenfalls ein Kälteaggregat 21 von vertikal oben in das Rührgefäß 4 eingesetzt, unter Abstützung eines sich in Betriebsstellung quer zur Rührgefäß-Achse x erstreckenden Halterungsteiles 22 auf den Stirnrand 41 des Rührgefäßes 4.

In Betriebsstellung gemäß Figur 6 unterseitig des Halterungsteils 22 ist das Kälteaggregat 21 vorgesehen. So ist bevorzugt ein topfförmiges Gehäuseteil 30 unterseitig des Halterungsteiles 22 an diesem befestigt, in welchem insbesondere ein Kompressor, ein Verflüssiger, weiter bevorzugt ein Drosselventil und ein Thermostat angeordnet sind. Weiter bevorzugt ist in diesem Gehäuseteil 30 auch eine Steuerelektronik für das Kälteaggregat 21 vorgesehen.

In dem deckelartigen Halterungsteil 22 sind bevorzugt die Kälteschlangen 26 angeordnet, so insbesondere von radial innen nach radial außen spiralförmig.

Das deckelartige Halterungsteil 22 formt oberseitig den Boden 42 eines Zubereitungsbereiches 14 aus, welcher Zubereitungsbereich 14 weiter bevorzugt topfförmig mit nach vertikal oben gerichteter Topföffnung ausgebildet ist.

Zum Verrühren der in dem Zubereitungsbereich 14 aufgenommenen und zu kühlenden Zutaten ist auch hier ein Rührteil 37 vorgesehen, dessen zentraler Dorn 38 den Bereich des Kälteaggregats 21 beziehungsweise des Gehäuseteiles 30 durchsetzt, zur drehfesten, kuppelnden Anbindung an das bodenseitig des Rührgefäßes 4 vorgesehene Rührwerk 15. Die Durchdringungsbereiche im Bereich des Gehäuseteils 30 sowie auch im Bereich des Halterungsteils 22 sind abgedichtet (Dichtungen 43). So ist eine hermetische Trennung zwischen dem das Kälteaggregat 21 aufweisenden Bereich und dem Zubereitungsbereich 14 gegeben.

Der in den Zubereitungsbereich 14 einragende Abschnitt des Dorns 38 trägt flügelartige Rührteil-Abschnitte 39.

Die elektrische Versorgung des Kälteaggregats 21, insbesondere des Kompressors, erfolgt auch hier über ein - nicht dargestelltes - gesondertes Stromkabel.

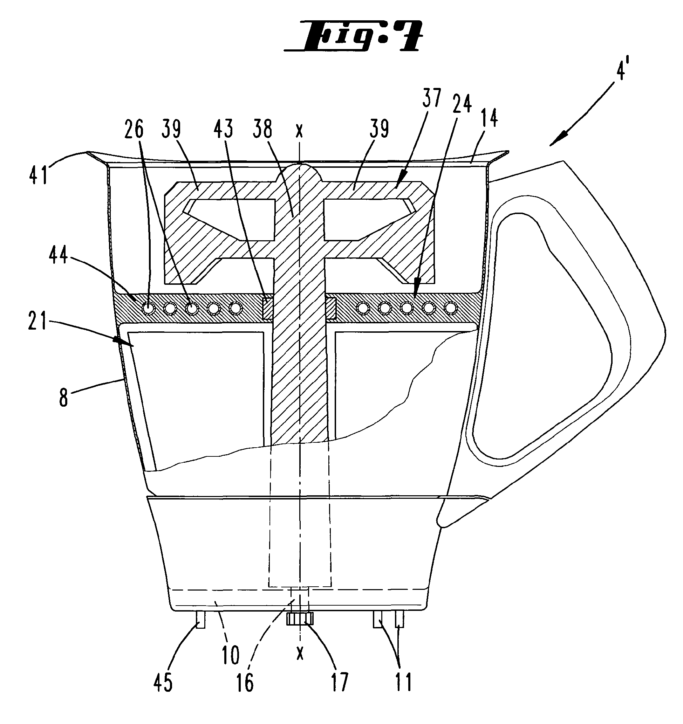

Figur 7 zeigt eine Ausführungsform, bei welcher beispielsweise zur Herstellung von Speiseeis ein gesondertes Rührgefäß 4' genutzt wird. Dieses wird anstelle des üblichen Rührgefäßes 4 in die Rührgefäß-Aufnahme 3 der Küchenmaschine 1 eingesetzt.

Das Rührgefäß 4' weist eine bevorzugt im üblichen Rührgefäß 4 gleich gestaltete Rührgefäß-Wandung 8 auf, wie auch einen Rührgefäß-Boden 10. Im Falle des Rührgefäßes 4' ist der Rührgefäß-Boden 10 bevorzugt nicht mit einer Heizung oder dergleichen versehen.

Weiter weist das Rührgefäß 4' eine horizontale, d.h. bevorzugt quer zur Rührgefäß-Achse x ausgerichtete Teilung auf, dies weiter in Form eines eingezogenen Bodens 44. Dieser erstreckt sich mit Bezug auf die vertikale Höhenerstreckung des Rührgefäß-Inneren etwa das Rührgefäß-Innere auf Zwei- und Ein-Drittel aufteilend. Der Boden 44 bildet hierbei einen dichtenden Abschluss zu der Rührgefäß-Wandung 8.

In dem sich unter dem Boden 44 erstreckenden, bevorzugt zumindest höhenmäßig größer gewählten Raum ist in bevorzugter Ausgestaltung das Kälteaggregat 21 aufgenommen, so insbesondere der Kompressor, der Verflüssiger, weiter auch ein Drosselventil und ein Thermostat. Der Boden 44 ist als Verdampfer ausgebildet, trägt innenseitig bevorzugt die spiralförmig angeordneten Kälteschlangen 26.

Oberhalb des Bodens 44 ist ein bevorzugt nach oben offener Zubereitungsbereich 14 ausgeformt. Dieser kann im Zuge der Zubereitung durch einen Deckel, bevorzugt den auch bei üblichem Betrieb das übliche Rührgefäß 4 abdeckenden Deckel überfangen sein.

Weiter bevorzugt ist das gesonderte Rührgefäß 4' mit einem Rührteil 37 versehen, mit sich von einem zentralen Dorn 38 nach radial außen erstreckenden, flügelartigen Rührteil-Abschnitten 39. Das Rührteil 37 ragt in den Zubereitungsbereich 14 ein.

Der Dorn 38 des Rührteils 37 durchsetzt bevorzugt den Boden 44 und den, das Kälteaggregat 22 aufnehmenden Raum des Rührgefäßes 4', wobei auch hier eine Dichtung 43 im Durchsetzungsbereich des Bodens 44 zu einer hermetischen Trennung von Zubereitungsbereich 14 und Aufnahmebereich des Kälteaggregates 21 führt.

Der Dorn 38 ist weiter bevorzugt im Bereich des Rührgefäß-Bodens 10 gelagert, weiter bevorzugt diesen durchsetzend und unterseitig des Rührgefäß-Bodens 10 einen Kupplungskopf 17 gemäß dem des Rührwerks 15 im üblichen Rührgefäß 4 entsprechend.

Die elektrische Versorgung der Komponenten des Kälteaggregats 21 erfolgt in bevorzugter Ausgestaltung über unterseitig des Rührgefäß-Bodens 10 über diesen frei hervorragende Kontakte 11, die mit Einsetzen des Rührgefäßes 4' in die Rührgefäß-Aufnahme 3 mit den im Bereich der Rührgefäß-Aufnahme 3 vorgesehenen Gegenkontakten 12 in Verbindung treten.

Mit Einsetzen des Rührgefäßes 4' in die Rührgefäß-Aufnahme 3 tritt auch der Kupplungskopf 17 mit der geräteseitigen Kupplungsaufnahme 18 in drehfeste Verbindung.

Bevorzugt erfolgt die Steuerung des Kälteaggregats 21 wie auch weiter bevorzugt die Steuerung des Rührteils 37 über die geräteseitige Software, weiter insbesondere unter benutzerseitiger Beeinflussung über den Multifunktions-Steller 7. Die eingestellten Werte, weiter bevorzugt auch Ist-Werte, wie beispielsweise Temperaturwerte, werden bevorzugt auf dem Display 6 der Küchenmaschine 1 angezeigt.

Weiter bevorzugt ist eine mechanische Erkennung des eingesetzten Rührgefäßes 4' vorgesehen. Hierzu ist, beispielsweise unterseitig des Bodens 10, ein bevorzugt abgefederter Tastfinger 45 vorgesehen, der mit einem nicht dargestellten Schalter in der Aufnahme 3 zusammenwirkt.

Insbesondere das gesonderte Rührgefäß 4', darüber hinaus aber auch das Rührgefäß 4 und/oder der jeweilige Zubereitungsbereich 14 verfügt über einen Temperatursensor, dessen Werte entweder unmittelbar über die Kontakte 11 (bei einer Ausgestaltung gemäß der dritten Ausführungsform) oder über das gesonderte Stromkabel 33 an einer Auswerteeinheit der Küchenmaschine 1 übermittelt werden.

**Bezugszeichenliste:**

| | | | |
|---|---|---|---|
| 1 | Küchenmaschine | 24 | Verdampfer |
| 2 | Gehäuse | 25 | Wandung |
| 3 | Rührgefäß-Aufnahme | 26 | Kälteschlange |
| 4 | Rührgefäß | 27 | Keilwand |
| 4' | Rührgefäß | 28 | Isolationsraum |
| 5 | Bedienfeld | 29 | Strömungsbrecher |
| 6 | Display | 30 | Gehäuseteil |
| 7 | Multifunktions-Steller | 31 | Verbindung |
| 8 | Rührgefäß-Wandung | 32 | Display |
| 9 | Gefäßöffnung | 33 | Stromkabel |
| 10 | Rührgefäß-Boden | 34 | Stecker |
| 11 | Kontakt | 35 | Steckaufnahme |
| 12 | Gegenkontakt | 36 | Bedientaste |
| 13 | Netzkabel | 37 | Rührteil |
| 14 | Zubereitungsbereich | 38 | Dorn |
| 15 | Rührwerk | 39 | Rührteil-Abschnitt |
| 16 | Antriebswelle | 40 | Einwirkungsabschnitt |
| 17 | Kupplungskopf | 41 | Stirnrand |
| 18 | Kupplungsaufnahme | 42 | Boden |
| 19 | Elektromotor | 43 | Dichtung |
| 20 | Festlegungsmittel | 44 | Boden |
| 21 | Kälteaggregat | 45 | Tastfinger |
| 22 | Halterungsteil | | |
| 23 | Öffnung | x | Rührgefäß-Achse |

## Patentansprüche

1. Elektromotorisch betriebene Küchenmaschine (1) mit einem Rührgefäß (4, 4') und einem Rührwerk (15) in dem Rührgefäß (4), und mit einem elektrisch betriebenen Kälteaggregat (21), wobei das Kälteaggregat (21) in dem Rührgefäß (4') aufgenommen ist und gesondert von dem Kälteaggregat (21) in dem Rührgefäß (4') ein Zubereitungsbereich (14) ausgebildet ist, in welchem ein durch das Rührwerk (15) angetriebenes Rührteil (37) anordbar ist, **dadurch gekennzeichnet, dass** das Kälteaggregat (21) ein nach Art eines Deckels auf das Rührgefäß (4, 4') aufsetzbares Halterungsteil (22) aufweist und dass ein Kompressor und/oder der Elektromotor des Kälteaggregats (21) in einem oberseitig des Halterungsteils (22), gegebenenfalls oberseitig einer als Einfüllfläche dienenden Oberseite des Rührgefäßes (4), ausgebildeten Gehäuseteil (30) untergebracht ist.

2. Küchenmaschine nach Anspruch 1, **dadurch gekennzeichnet, dass** Kälteschlangen (26) des Kälteaggregates innerhalb des Innenraumes des Rührgefäßes (4) angeordnet sind.

3. Küchenmaschine nach einem der vorhergehenden Ansprüche, **dadurch gekennzeichnet, dass** ein Boden (42,44) des Zubereitungsbereiches (14) mit Kälteschlangen (26) des Kälteaggregats (21) in wärmeleitendem Kontakt ist oder von diesen durchsetzt ist.

4. Küchenmaschine nach einem der vorhergehenden Ansprüche, **dadurch gekennzeichnet, dass** bodenseitig des Rührgefäßes (4, 4') zur Spannungsversorgung des Elektromotors des Kälteaggregats (21) Elektrokontakte (11) ausgebildet sind, die bei eingesetztem Zustand des Rührgefäßes (4, 4') in leitender Verbindung zu Kontakten (12) der Küchenmaschine (1) stehen.

5. Küchenmaschine nach einem der vorhergehenden Ansprüche, **dadurch gekennzeichnet, dass** das mit dem Kälteaggregat (21) versehene Rührgefäß (4, 4') zufolge einer elektrischen oder elektronischen Abfrage oder einer mechanischen Schaltung von der Küchenmaschine (1) erkennbar ist.

6. Küchenmaschine nach einem der vorhergehenden Ansprüche, **dadurch gekennzeichnet, dass** das Kälteaggregat (21), bezogen auf einen unterhalb des Halterungsteils (22) gegebenen Innenraum des Rührgefäßes (4), außerhalb des Rührgefäßes (4) angeordnet ist.

7. Küchenmaschine nach einem der vorhergehenden Ansprüche, **dadurch gekennzeichnet, dass** der Elektromotor des Kälteaggregats (21) über ein gesondertes Stromkabel (33) elektrisch versorgbar ist.

8. Küchenmaschine nach Anspruch 7, **dadurch gekennzeichnet, dass** das gesonderte Stromkabel (33) mit einem Netzstecker versehen ist.

9. Küchenmaschine nach einem der Ansprüche 7 oder 8, **dadurch gekennzeichnet, dass** das gesonderte Stromkabel (33) mit einem Stecker (34) zum Einstecken in eine, in der Küchenmaschine (1) ausgebildete, gesonderte elektrische Steckaufnahme (35) versehen ist.

10. Küchenmaschine nach einem der vorhergehenden Ansprüche, **dadurch gekennzeichnet, dass** das Gehäuseteil (30) über eine oder mehrere starre Verbindungen (31), die gegebenenfalls auch der Leitung von Kälteflüssigkeit dienen, an dem Halterungsteil (22) befestigt ist.

11. Küchenmaschine nach einem der vorhergehenden Ansprüche, **dadurch gekennzeichnet, dass** das Halterungsteil (22) ein unterseitig ausgebildetes Ringteil aufweist, das in das Rührgefäß (4) eingreift und von der Kälte-flüssigkeit durchströmbar ist.

12. Küchenmaschine nach einem der vorhergehenden Ansprüche, **dadurch gekennzeichnet, dass** das Halterungsteil (22) einen Aufsetzrand ausbildet zum Aufsetzen auf einen Stirnrand (41) des Rührgefäßes (4), wobei in einem unteren Bereich des Halterungsteils (22) das Kälteaggregat (21) und in einem oberen Bereich der Zubereitungsbereich (14) ausgebildet ist.

## Claims

1. Food processor (1) operated by an electric motor, comprising a mixing vessel (4, 4') and a mixer (15) in the mixing vessel (4), and comprising an electrically powered refrigeration unit (21), the refrigeration unit (21) being accommodated in the mixing vessel (4') and a preparation region (14) being formed separately from the refrigeration unit (21) in the mixing vessel (4'), in which region a mixing element (37) driven by the mixer (15) can be arranged, **characterised in that** the refrigeration unit (21) comprises a holding part (22) which can be attached to the mixing vessel (4, 4') in the manner of a lid and **in that** a compressor and/or the electric motor of the refrigeration unit (21) is housed in a housing part (30) formed on the upper side of the holding part (22) or optionally on the upper side of a top part of the mixing vessel (4) acting as a filling area.

2. Food processor according to claim 1, **characterised in that** refrigeration coils (26) of the refrigeration unit are arranged inside the inner chamber of the mixing vessel (4).

3. Food processor according to any of the preceding claims, **characterised in that** a base (42, 44) of the preparation region (14) is in heat-conducting contact with refrigeration coils (26) of the refrigeration unit (21) or is penetrated thereby.

4. Food processor according to any of the preceding claims, **characterised in that** electric contacts (11) are formed on the base of the mixing vessel (4, 4') for supplying the electric motor of the refrigeration unit (21) with power, which contacts are in conductive connection with contacts (12) of the food processor (1) when the mixing vessel (4, 4') is inserted.

5. Food processor according to any of the preceding claims, **characterised in that** the mixing vessel (4, 4') provided with the refrigeration unit (21) can be identified by the food processor (1) as a result of an electrical or electronic inquiry or a mechanical switching operation.

6. Food processor according to any of the preceding claims, **characterised in that** the refrigeration unit (21) is arranged outside the mixing vessel (4) relative to an inner chamber of the mixing vessel (4) provided beneath the holding part (22).

7. Food processor according to any of the preceding claims, **characterised in that** the electric motor of the refrigeration unit (21) can be supplied with electricity by means of a separate power cable (33).

8. Food processor according to claim 7, **characterised in that** the separate power cable (33) is provided with a power plug.

9. Food processor according to either claim 7 or claim 8, **characterised in that** the separate power plug (33) is provided with a plug (34) for plugging into a separate electrical socket (35) formed in the food processor (1).

10. Food processor according to any of the preceding claims, **characterised in that** the housing part (30) is attached to the holding part (22) by means of one or more rigid connections (31), which are optionally also used to conduct the refrigeration fluid.

11. Food processor according to any of the preceding claims, **characterised in that** the holding part (22) has an annular part which is formed on the lower side, engages in the mixing vessel (4) and through which the refrigeration fluid can flow.

12. Food processor according to any of the preceding claims, **characterised in that** the holding part (22) forms an attachment edge for attaching to a front edge (41) of the mixing vessel (4), the refrigeration unit (21) being formed in a lower region of the holding part (22) and the preparation region (14) being formed in an upper region.

## Revendications

1. Robot de cuisine (1) électrique ayant une cuve de mélange (4, 4') et un dispositif mélangeur (15) dans la cuve de mélange (4), et ayant une unité de refroidissement électrique (21), dans lequel l'unité de refroidissement (21) est reçue dans la cuve de mélange (4') et une zone de préparation (14) séparée de l'unité de refroidissement (21) est formée dans la cuve de mélange (4'), dans laquelle zone de préparation est susceptible d'être disposé un élément mélangeur (37) entraîné par le dispositif mélangeur (15), **caractérisé en ce que** l'unité de refroidissement (21) présente une partie formant support (22) apte à être montée sur la cuve de mélange (4, 4') à la façon d'un couvercle et **en ce qu'**un compresseur et/ou le moteur électrique de l'unité de refroidissement (21) est logé dans un boîtier (30) formé au-dessus de la partie formant support (22), le cas échéant au-dessus d'une partie supérieure de la cuve de mélange (4) servant de surface de remplissage.

2. Robot de cuisine selon la revendication 1, **caractérisé en ce que** des serpentins de refroidissement (26) de l'unité de refroidissement sont agencés à l'intérieur de l'unité de refroidissement (4).

3. Robot de cuisine selon l'une des revendications précédentes, **caractérisé en ce qu'**un fond (42, 44) de la zone de préparation (14) est en contact de conduction de chaleur avec des serpentins de refroidissement (26) de l'unité de refroidissement (21) ou est traversé par ceux-ci.

4. Robot de cuisine selon l'une des revendications précédentes, **caractérisé en ce que** des contacts électriques (11) sont agencés du côté du fond de la cuve de mélange (4, 4') pour l'alimentation du moteur électrique de l'unité de refroidissement (21), lesquels contacts électriques (11) sont en liaison conductrice avec des contacts (12) du robot de cuisine (1) lorsque la cuve de mélange (4, 4') est en position insérée.

5. Robot de cuisine selon l'une des revendications précédentes, **caractérisé en ce que** la cuve de mélange (4, 4') pourvue de l'unité de refroidissement (21) est détectée par le robot de cuisine (1) par suite d'une interrogation électrique ou électronique ou d'un couplage mécanique.

6. Robot de cuisine selon l'une des revendications précédentes, **caractérisé en ce que** l'unité de refroidissement (21) est agencée en-dehors de la cuve de mélange (4) en référence à un espace intérieur donné de la cuve de mélange (4) situé en-dessous de la partie formant support (22).

7. Robot de cuisine selon l'une des revendications précédentes, **caractérisé en ce que** le moteur électrique de l'unité de refroidissement (21) est alimenté électriquement par un cordon d'alimentation séparé (33).

8. Robot de cuisine selon la revendication 7, **caractérisé en ce que** le cordon d'alimentation séparé (33) est pourvu d'une fiche d'alimentation.

9. Robot de cuisine selon l'une des revendications 7 ou 8, **caractérisé en ce que** le cordon d'alimentation séparé (33) est pourvu d'une fiche (34) pour enfichage dans une prise électrique (35) séparée qui est agencée dans le robot de cuisine (1).

10. Robot de cuisine selon l'une des revendications précédentes, **caractérisé en ce que** le boîtier (30) est fixé à la partie formant support (22) par une ou plusieurs liaisons rigides (31) qui servent aussi le cas échéant à la circulation du fluide de refroidissement.

11. Robot de cuisine selon l'une des revendications précédentes, **caractérisé en ce que** la partie formant support (22) présente en partie inférieure une partie annulaire pénétrant dans la cuve de mélange (4) et qui est traversée par le fluide de refroidissement.

12. Robot de cuisine selon l'une des revendications précédentes, **caractérisé en ce que** la partie formant support (22) forme un bord de montage pour le montage sur un bord frontal (41) de la cuve de mélange (4), dans lequel l'unité de refroidissement (21) est agencée dans une zone inférieure de la partie formant support (22) et la zone de préparation (14) est agencée dans une zone supérieure.
